# EUROPÄISCHE PATENTSCHRIFT

(11) **EP 0 936 444 B1**
(45) Veröffentlichungstag und Bekanntmachung des Hinweises auf die Patenterteilung: **19.09.2001**
(21) Anmeldenummer: 99102247.6
(22) Anmeldetag: 05.02.1999
(51) Int. Cl.: G01D 5/22, G01B 7/30, G01B 7/02

(54) **Anordnung zur berührungslosen Positionsbestimmung eines Messobjektes, vorzugsweise einer Schaltwelle eines Kraftfahrzeuggetriebes**
Device for contact-free determination of the position of an object, in particularly of a switching shaft of a vehicle gear selector
Dispositif de détection sans contact de la position d'un objet, en particulier d'un arbre de commande d'une boîte de vitesse d'un véhicule

(30) Priorität: 12.02.1998 DE 19805621
(43) Veröffentlichungstag der Anmeldung: 18.08.1999
(73) Patentinhaber: Hydraulik-Ring GmbH, 09212 Limbach-Oberfrohna (DE)
(72) Erfinder: Tischer, Dieter, 73240 Wendlingen (DE); Trzmiel, Alfred, 72601 Grafenberg (DE)
(74) Vertreter: Kohl, Karl-Heinz

(56) Entgegenhaltungen:
- DE-A- 4 425 904
- US-A- 5 204 621

## Beschreibung

Die Erfindung betrifft eine Anordnung zur berührungslosen Positionsbestimmung eines Meßobjektes, vorzugsweise einer Schaltwelle eines Kraftfahrzeuggetriebes, nach dem Oberbegriff des Anspruches 1.

Bei dieser bekannten Anordnung (DE 44 25 904 A1) ist ein magnetischer Wegsensor zur Erfassung der Lage eines Meßobjektes vorgesehen, welches berührungslos entlang eines stabförmigen, mit einer über die gesamte Länge des zu erfassenden Weges reichenden Meßwicklung versehenen Magnetkerns bewegbar ist. Das Meßobjekt sättigt den Magnetkern an einer dem Meßobjekt benachbarten Stelle und erzeugt so einen virtuellen Luftspalt. An den Enden des Magnetkerns sind zwei weitere in Reihe geschaltete Spulen angeordnet, welchen eine Auswerteschaltung zur Erfassung der induzierten Differenzspannung nachgeschaltet ist, woraus die Position des Meßobjektes ableitbar ist. Eine Konstantstromquelle dient der Erregung der Meßwicklung mit einem Wechselstrom konstanter Amplitude. Der Wegsensor eignet sich jedoch lediglich zur Erfassung eindimensionaler Bewegungen. Um eine mehrdimensionale, beispielsweise eine zweidimensionale Positionsbestimmung durchführen zu können, ist ein zweiter derartiger Sensor erforderlich, wobei mindestens einer der beiden Sensoren direkt oder über einen geeigneten Mechanismus an das Meßobjekt gekoppelt ist. Bei einer direkten Kopplung eines Sensors an das Meßobjekt sind zudem zur Übertragung der Sensorsignale zusätzliche Meßleitungen erforderlich.

Es ist eine Anordnung bekannt (US-A-5 204 621), die zur Positionsermittlung eines linearen oder drehbaren Meßobjekts einen Sensor mit einem weichmagnetischen Kern und einem Kontrollmagneten aufweist. Um den Einfluß externer Magnetfelder zu verringern, ist der weichmagnetische Kern rinnenförmig ausgebildet. Der Kontrollmagnet ist zwischen Schenkeln des Kerns in der Meßspule angeordnet und kann durch das Meßobjekt bewegt werden. Dadurch kann der Luftspalt zwischen dem Kontrollmagneten und dem Kern klein und immer gleich groß gehalten werden.

Der Erfindung liegt die Aufgabe zugrunde, die eingangs genannte Anordnung so auszubilden, daß mit ihr auf konstruktiv einfache Weise eine zumindest zweidimensionale Positionsbestimmung eines Meßobjektes möglich ist.

Diese Aufgabe wird bei der gattungsgemäßen Anordnung erfindungsgemäß mit den kennzeichnenden Merkmalen des Anspruches 1 gelöst.

Bei der erfindungsgemäßen Anordnung ist lediglich ein einziges Auslöseelement mit den beiden Magneten erforderlich, um die Position des Meßobjektes in wenigstens zwei Dimensionen zu erfassen. So kann beim Meßobjekt eine translatorische und eine rotatorische Bewegung mit dem Auslöseelement erfaßt werden. Durch die voneinander abweichenden Magnetisierungsrichtungen der beiden Magneten entsteht ein Magnetfeld, dessen wirksamer Bereich sich bei Drehung des Auslöseelementes innerhalb eines begrenzten Winkelbereiches verbreitert. Die Ausdehnung des virtuellen Luftspaltes verändert sich dabei lediglich in einer Richtung. Um zu gewährleisten, daß die von den beiden Magneten ausgehenden, einander überlagernden Magnetfelder in der Umgebung des Sensorelementes größenordnungsmäßig ungefähr gleich große Beträge annehmen, müssen die Magneten bezüglich der Magnetvolumina und der Größenverhältnisse aufeinander abgestimmt sein. Die Winkeldifferenz zwischen den Magnetisierungsrichtungen beider Magneten sollte so groß sein, daß allzu starke Wechselwirkungen zwischen den Magneten ausgeschlossen werden können und daß die Verbreiterung des virtuellen Luftspaltes demzufolge lediglich in einer Richtung erfolgt.

Die Wegerfassung erfolgt bei der erfindungsgemäßen Anordnung vorteilhaft durch Auswertung einer an einer ersten Sekundärwicklung des Sensorelementes induzierten Spannung, während die Winkelinformation aus einer induzierten Differenzspannung zwischen der ersten und einer zweiten Sekundärwicklung ableitbar ist. In vorteilhafter Ausgestaltung ist daher der ersten Sekundärwicklung zur Erfassung einer ersten Meßgröße ein erster Gleichrichter und einer Reihenschaltung beider Sekundärwicklungen zur Erfassung einer zweiten Meßgröße ein zweiter Gleichrichter nachgeschaltet. Vorzugsweise handelt es sich bei den beiden Gleichrichtern um Spitzenwertgleichrichter, um eine möglichst hohe Güte der Meßsignale zu realisieren. Eine aufwendige Auswerteelektronik zur Aufbereitung und Auswertung der Meßergebnisse ist dadurch nicht notwendig.

Die Erregung einer Primärwicklung des Sensorelementes erfolgt in einer vorteilhaften Ausgestaltung mittels eines dreieckförmigen Wechselstroms. Dies bietet den Vorteil, daß insbesondere bei Anwendungen im Kraftfahrzeugbereich niedrigere Effektivstromwerte möglich sind, um eine ausreichende Erregung der Primärwicklung zu gewährleisten.

Vorteilhaft ist das Sensorelement mit einer Meßspule versehen, die sich parallel zur Verschieberichtung des Meßobjektes erstreckt. Die Meßspule weist vorteilhaft einen Kern aus weichmagnetischem Material auf.

Der Kern besteht vorzugsweise einerseits aus einem längsgestreckten Streifen aus weichmagnetischem, kristallinem Material und andererseits aus mindestens einem Streifen aus amorphem oder nanokristallinem Material. Der Streifen aus weichmagnetischem Material und die amorphen und nanokristallinen Streifen können auf einfache Weise durch die umgebende Primärwicklung miteinander verbunden sein. Alternativ zu den genannten Kernmaterialien ist die Verwendung von Kernen aus kunststoffgebundenem Material möglich. Alle genannten Möglichkeiten dienen der Verbesserung der Störempfindlichkeit infolge von einwirkenden Gleichfeldern. Dadurch führen selbst relativ große Gleichfelder nicht zur Sättigung des Kernes und der damit verbundenen Verschiebung des virtuellen Luftspaltes.

Um sowohl bei der translatorischen Bewegung als auch bei der rotatorischen Bewegung des Meßobjektes ausreichende Spannungshübe an den beiden Sekundärwicklungen zu ermöglichen, sollte die Frequenz des der Primärwicklung eingeprägten Wechselstroms zwischen 3 kHz und 5 kHz betragen und der Effektivwert des Wechselstroms zwischen 5 mA und 20 mA.

Weitere Merkmale der Erfindung ergeben sich aus den weiteren Ansprüchen, der Beschreibung und den Zeichnungen.

Die Erfindung wird nachfolgend an einem Ausführungsbeispiel anhand der Zeichnungen näher erläutert. Es zeigt
- Fig. 1: ein Prinzipschaltbild einer erfindungsgemäßen Anordnung,
- Fig. 2: ein Sensor- und Auslöseelement einer erfindungsgemäßen Anordnung in Seitenansicht,
- Fig. 3: das Sensor- und das Auslöseelement gemäß Fig. 2 in Draufsicht mit im Schnitt dargestelltem Sensorelement,
- Fig. 4 und Fig. 5: die Abhängigkeit der Meßsignale des Sensorelementes von der Position des Auslöseelementes,
- Fig. 6: in schematischer Darstellung und in Seitenansicht die erfindungsgemäße Anordnung in Verbindung mit einer Schaltwelle eines Kraftfahrzeugschaltgetriebes,
- Fig. 7: die Anordnung gemäß Fig. 6 in Vorderansicht.

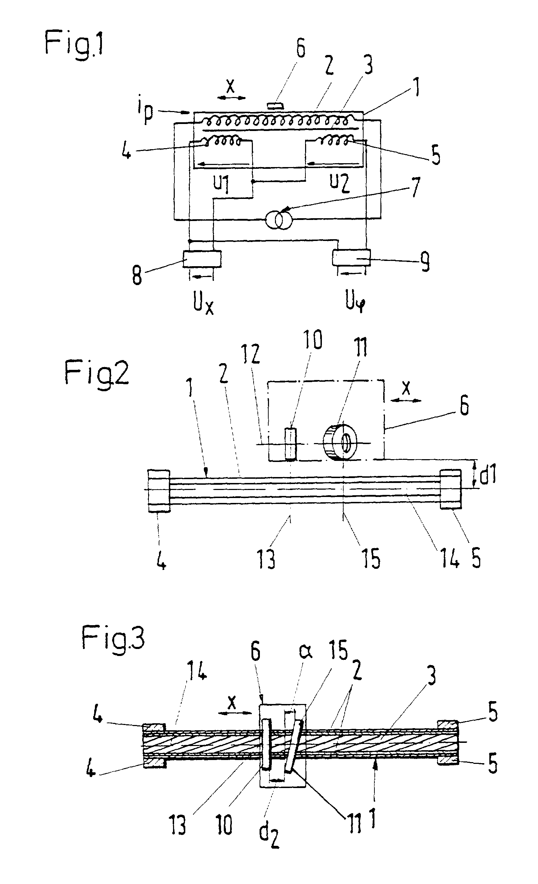

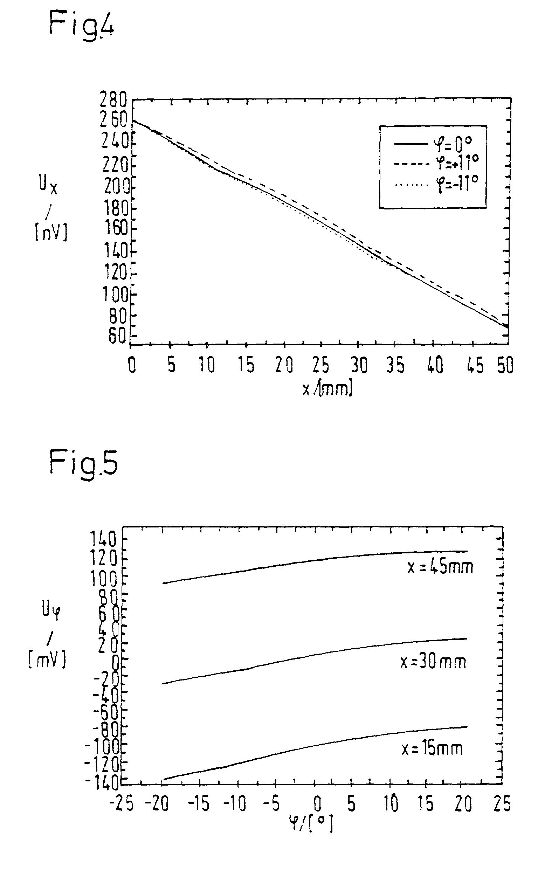

Das Prinzipschaltbild gemäß Fig. 1 zeigt eine Spule 1 als Sensorelement und ein Auslöseelement 6, welches in einem axial in der Spule 1 angeordneten, aus weichmagnetischem Material bestehenden Kern 3 einen virtuellen Luftspalt erzeugt. Das Auslöseelement 6 kann parallel zur Achse 14 der Spule 1 in Richtung x verschoben und um die Verschiebeachse gedreht werden. Die Spule 1 weist ferner eine Primärwicklung 2, welche durch einen von einer Stromquelle 7 erzeugten Wechselstrom i_{P} erregt wird, und zwei Sekundärwicklungen 4 und 5 mit entgegengesetztem Wicklungssinn auf. Die in den Sekundärwicklungen 4 und 5 induzierten Spannungen u₁ und u₂ sind von der Lage und von der Ausdehnung des durch das Auslöseelement 6 erzeugten virtuellen Luftspaltes abhängig. Eine erste induzierte Spannung u₁ wird einem ersten Gleichrichter 8 zugeführt, welcher ausgangsseitig eine Gleichspannung Uₓ liefert, deren Betrag proportional zur Wegposition des Auslöseelementes 6 ist (Fig. 4). Einem zweiten Gleichrichter 9 wird die Differenz der an den Sekundärwicklungen 4 und 5 induzierten Spannung u₁ und u₂ zugeführt. Die Differenzbildung erfolgt durch Reihenschaltung der beiden Sekundärwicklungen 4 und 5 bei entgegengesetztem Wicklungssinn. Die gleichgerichtete Differenzspannung U_{ϕ} verhält sich in guter Näherung proportional zur Winkelposition ϕ des Auslöseelementes 6 (Fig. 5). Sowohl die Translations- als auch die Rotationsachse des Auslöseelementes 6 sind im hier betrachteten Anwendungsbeispiel parallel zur Achse 14 der Spule 1.

Anhand von Fig. 2 ist ersichtlich, daß ein erster Ringmagnet 10 des Auslöseelementes 6 einen Abstand d1 zur Spulenachse 14 aufweist.

Die Spule 1 ist vorzugsweise über ihre gesamte Länge von der Primärwicklung 2 umgeben, während die Sekundärwicklungen 4 und 5 vorteilhaft nur an den Enden der Spule 1 angeordnet sind und dort die Primärwicklung 2 umgeben (s. auch Fig. 3). Die Sekundärwicklungen 4, 5 haben einen Abstand voneinander, der mindestens dem maximalen translatorischen Verschiebeweg des Auslöseelementes 6 entspricht.

In Fig. 3 ist das zwei Ringmagneten 10 und 11 aufweisende Auslöseelement 6 in der Draufsicht dargestellt und die Spule 1 in geschnittener Darstellung. Die Verwendung von Stabmagneten anstelle von Ringmagneten ist prinzipiell auch möglich, allerdings nur zur Bestimmung verhältnismäßig kleiner Drehwinkel ϕ. Die Ringmagneten 10 und 11 sind in axialer Richtung magnetisiert. Die beiden Ringmagnete 10, 11 sind im Bereich neben der Spule 1 angeordnet. Ein erster Ringmagnet 10 ist in einer Ebene senkrecht zur Achse 14 der Spule 1 angeordnet, so daß die Achse 12 des Ringmagneten 10 parallel zur Spulenachse 14 liegt. Wie sich aus Fig. 3 ergibt, ist der Ringmagnet 10 in bezug auf die Spule 1 so angeordnet, daß eine zur Ringmagnetachse 12 senkrechte Mittelachse 13 des Ringmagneten 10 die Spulenachse 14 schneidet. Der zweite Ringmagnet 11 ist gegenüber dem ersten Ringmagneten 10 um eine zur Mittelachse 13 parallele Achse 15 um einen Winkel α verdreht. Die Achse 15 schneidet ebenfalls die Spulenachse 14. Die beiden Ringmagnete 10, 11 haben einen Abstand d₂ voneinander

Fig. 4 zeigt die Abhängigkeit der Spannung Uₓ von der Wegposition x eines Meßobjektes, an dem das Auslöseelement 6 vorgesehen ist, für drei unterschiedliche Winkelpositionen (ϕ = 0°, ϕ = +11°, ϕ = -11°). Über den gesamten Meßbereich der Wegposition x ergibt sich ein Spannungsgefälle von 200 mV. Die Spannung Uₓ nimmt in guter Näherung linear mit wachsender Linearverschiebung x ab und ist dabei weitgehend unbeeinflußt von der Winkelposition ϕ.

Variationen der Winkelposition ϕ des Meßobjektes im Bereich von -20° bis +20° erzeugen gemäß Fig. 5 bei der Spannung U_{ϕ} Spannungsveränderungen von mindestens 20 mV. Die Abhängigkeit der Spannung U_{ϕ} von der Winkelposition ϕ des Meßobjektes ist für drei unterschiedliche Wegpositionen dargestellt (x = 15 mm, x = 30 mm, x = 45 mm). Für eine feste Wegposition x besteht in guter Näherung eine lineare Abhängigkeit zwischen der Differenzspannung U_{ϕ} und der Winkelposition ϕ. Der Einfluß der Wegposition x auf die Spannung U_{ϕ} kann beispielsweise durch Bildung eines Summensignals oder durch eine einfache unterlagerte Regelung eliminiert werden.

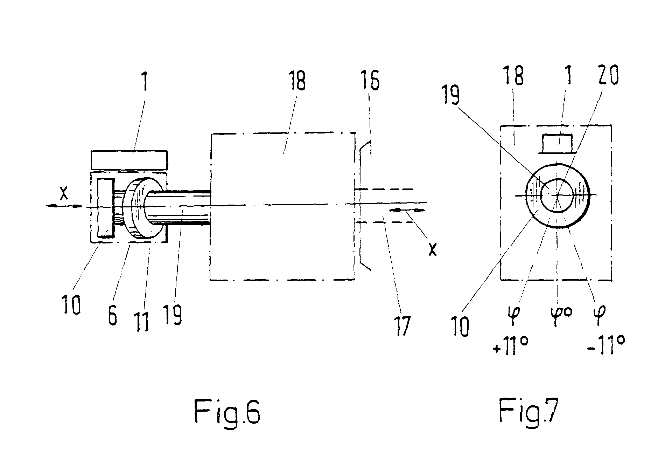

Die Fig. 6 und 7 zeigen in schematischer Darstellung ein Anwendungsbeispiel der beschriebenen Anordnung. Vorteilhaft kann diese Anordnung bei Stelleinrichtungen zur Automatisierung von Handschaltgetrieben von Kraftfahrzeugen eingesetzt werden. Solche Stelleinrichtungen sind beispielsweise in der DE 196 10 491 beschrieben. Um bei einem Schaltgetriebe die Gassen anzuwählen und die Gänge einzulegen, wird eine Schaltwelle axial verschoben sowie um ihre Achse gedreht. Fig. 6 zeigt das Handschaltgetriebe 16, dessen Schaltwelle 17 mit einem Gangsteller 18 gekuppelt ist. Innerhalb des Gangstellers 18 ist die Schaltwelle 17 mit einer aus dem Gangsteller 18 ragenden Verlängerung 19 gekuppelt. Es ist selbstverständlich auch möglich, die Schaltwelle 17 durchgehend auszubilden. Die Schaltwelle 19 bildet das Meßobjekt, auf dem das Auslöseelement 6 angeordnet ist. Es weist die beiden Ringmagnete 10 und 11 auf, die in der beschriebenen Weise ortsfest auf der Schaltwelle 17 bzw. deren Verlängerung 19 angeordnet sind. Dem Auslöseelement 6 liegt das Sensorelement 1 in Form der Spule gegenüber. Die Schaltwelle 17/19 kann in x-Richtung axial verschoben und um ihre Achse 20 um den Winkel ϕ gedreht werden. In Fig. 7 sind beispielhaft die Verdrehwinkel ϕ von + 11° und -11° angegeben. Durch Verschieben der Schaltwelle 17/19 in x-Richtung wird, wie sich aus Fig. 4 ergibt, über die Spannung Uₓ die Wegposition x ermittelt. Wird die Schaltwelle 17/19 um ihre Achse 20 gedreht, kann aus der Differenzspannung U_{ϕ} bei der jeweiligen Wegposition x der Drehwinkel einfach festgestellt werden, wie anhand von Fig. 5 erläutert worden ist. Die beschriebene Verschiebe- und Verdrehbewegung der Schaltwelle 17/19 wird dann, wie in der DE 196 10 491 im einzelnen beschrieben ist, so umgesetzt, daß die gewünschten Gänge eingelegt bzw. die gewünschten Gassen des Getriebes angewählt werden.

Die Magnete 10, 11 müssen nicht ringförmig ausgebildet sein. Da der Verdrehwinkel ϕ der Schaltwelle 17/19 nur über einen bestimmten Winkelbereich erfolgt, reicht es aus, diese Magnete 10, 11 teilringförmig auszubilden.

## Patentansprüche

1. Anordnung zur berührungslosen Positionsbestimmung eines Meßobjektes, vorzugsweise einer Schaltwelle eines Kraftfahrzeuggetriebes, mit einem auf Magnetkräfte reagierenden Sensorelement, längs dem das Meßobjekt verschiebbar ist, das mit wenigstens einem Auslöseelement versehen ist,
**dadurch gekennzeichnet, daß** das Auslöseelement (6) zwei ortsfest zueinander angeordnete Magnete (10, 11) aufweist, die Abstand voneinander haben und im Bereich neben dem Sensorelement (1) angeordnet sind, und daß der eine Magnet (11) zur Erzeugung eines einseitig verbreiterten virtuellen Luftspaltes gegenüber dem anderen Magneten (10) um einen Winkel (α) verdreht ist.

2. Anordnung nach Anspruch 1,
**dadurch gekennzeichnet, daß** die beiden vorzugsweise gleich ausgebildeten Magnete (10, 11) wenigstens teilringförmig ausgebildet, vorzugsweise Ringmagnete sind.

3. Anordnung nach Anspruch 1 oder 2,
**dadurch gekennzeichnet, daß** das Sensorelement (1) eine Meßspule aufweist, die sich parallel zur Verschieberichtung (x) des Meßobjekts (17, 19) erstreckt.

4. Anordnung nach Anspruch 3,
**dadurch gekennzeichnet, daß** eine Primärwicklung (2) der Meßspule an eine Stromquelle (7), vorzugsweise eine Wechselstromquelle, angeschlossen ist, und daß vorteilhaft auf der Primärwicklung (2) zwei Sekundärwicklungen (4, 5) angeordnet sind, deren Abstand voneinander dem maximalen Verschiebeweg des Meßkörpers (17, 19) angepaßt ist.

5. Anordnung nach Anspruch 4,
**dadurch gekennzeichnet, daß** die beiden Sekundärwicklungen (4, 5) entgegengesetzten Wicklungssinn aufweisen und vorzugsweise in Reihe geschaltet sind.

6. Anordnung nach einem der Ansprüche 3 bis 5,
**dadurch gekennzeichnet, daß** die Meßspule einen Kern (3) aus weichmagnetischem Material aufweist, und daß vorzugsweise das Auslöseelement (6) zur Sättigung des Kerns (3) an einer dem Meßobjekt (17, 19) benachbarten Stelle vorgesehen ist.

7. Anordnung nach einem der Ansprüche 3 bis 6,
**dadurch gekennzeichnet, daß** beide Magnete (10, 11) einen Abstand (d₁) zur Achse (14) der Meßspule haben.

8. Anordnung nach einem der Ansprüche 1 bis 7,
**dadurch gekennzeichnet, daß** der eine Magnet (10) so angeordnet ist, daß seine Achse (12) parallel zur Achse (14) des Sensorelementes (1) liegt, wobei vorteilhaft eine senkrecht zur Achse (12) liegende Mittelachse (13) des einen Magneten (10) die Achse (14) des Sensorelementes (1) schneidet.

9. Anordnung nach einem der Ansprüche 1 bis 8,
**dadurch gekennzeichnet, daß** der zweite Magnet (11) gegenüber dem ersten Magneten (10) um eine zur Mittelachse (13) des ersten Magneten (10) parallele und vorzugsweise die Achse (14) des Sensorelementes (1) schneidende Achse (15) um den Winkel (α) verdreht ist.

10. Anordnung nach einem der Ansprüche 1 bis 9,
**dadurch gekennzeichnet, daß** sich die Achse (14) des Sensorelementes (1) parallel zu einer rotatorischen Bewegungsachse (20) des Meßobjektes (17, 19) erstreckt.

11. Anordnung nach einem der Ansprüche 1 bis 9,
**dadurch gekennzeichnet, daß** sich die Achse (14) des Sensorelementes (1) senkrecht zu einer rotatorischen Bewegungsachse (20) des Meßobjektes (17, 19) erstreckt.

12. Anordnung nach einem der Ansprüche 4 bis 11,
**dadurch gekennzeichnet, daß** der einen Sekundärwicklung (4) zur Erfassung einer induzierten Spannung (Uₓ) als einer ersten Meßgröße ein erster Gleichrichter (8) nachgeschaltet ist, und daß vorzugsweise der Reihenschaltung beider Sekundärwicklungen (4, 5) zur Erfassung einer induzierten Differenzspannung (Uϕ) als einer zweiten Meßgröße ein zweiter Gleichrichter (9) nachgeschaltet ist, wobei vorteilhaft die beiden Gleichrichter (8, 9) Mittel zur Spitzenwertgleichrichtung aufweisen

13. Anordnung nach einem der Ansprüche 4 bis 12,
**dadurch gekennzeichnet, daß** die an die Primärwicklung (2) angeschlossene Stromquelle (7) Mittel zur Erzeugung eines dreieckförmigen Wechselstroms (i_{P}) aufweist.

14. Anordnung nach einem der Ansprüche 6 bis 13,
**dadurch gekennzeichnet, daß** der Kern (3) einerseits aus einem längsgestreckten Streifen aus weichmagnetischem, kristallinem Material und andererseits aus mindestens einem Streifen aus amorphem Material besteht.

15. Anordnung nach einem der Ansprüche 6 bis 13,
**dadurch gekennzeichnet, daß** der Kern (3) einerseits aus einem längsgestreckten Streifen aus weichmagnetischem, kristallinem Material und andererseits aus mindestens einem Streifen aus nanokristallinem Material besteht.

16. Anordnung nach einem der Ansprüche 6 bis 13,
**dadurch gekennzeichnet, daß** der Kern (3) aus kunststoffgebundenem Material besteht.

17. Anordnung nach einem der Ansprüche 4 bis 16,
**dadurch gekennzeichnet, daß** die Frequenz des der Primärwicklung (2) eingeprägten Wechselstroms (i_{P}) zwischen 3 kHz und 5 kHz und vorteilhaft der Effektivwert des Wechselstroms (i_{P}) zwischen 5 mA und 20 mA betragen.

## Claims

1. A device for the contact-free determination of the position of an object to be measured, preferably a gear-shift shaft of a motor-vehicle gearbox, with a sensor element which reacts to magnetic forces and along which the object to be measured is displaceable, which [object] is provided with at least one release element, **characterized in that** the release element (6) comprises two magnets (10, 11) which are arranged stationary with respect to each other and which are spaced from each other and are arranged in the region adjacent to the sensor element (1), and one magnet (11) is rotated by an angle (α) with respect to the other magnet (10) in order to form a virtual air gap widened on one side.

2. A device according to Claim 1, **characterized in that** the two magnets (10, 11) which are preferably constructed similarly are at least partially annular, and are preferably ring magnets.

3. A device according to Claim 1 or 2, **characterized in that** the sensor element (1) comprises a measuring coil extending parallel to the displacement direction (**x**) of the object to be measured (17, 19).

4. A device according to Claim 3, **characterized in that** a primary winding (2) of the measuring coil is connected to a current source (7), preferably an alternating-current source, and two secondary windings (4, 5), the distance between which is adapted to the maximum displacement path of the object to be measured (17, 19), are advantageously placed on the primary winding (2).

5. A device according to Claim 4, **characterized in that** the two secondary windings (4, 5) have opposite winding directions and are preferably connected in series.

6. A device according to one of Claims 3 to 5, **characterized in that** the measuring coil has a core (3) of soft magnetic material, and the release element (6) is preferably provided at a position adjacent to the object to be measured (17, 19) in order to saturate the core (3).

7. A device according to one of Claims 3 to 6, **characterized in that** the two magnets (10, 11) are at a distance (**d**_{**1**}) from the axis (14) of the measuring coil.

8. A device according to one of Claims 1 to 7, **characterized in that** one magnet (10) is arranged in such a way that its axis (12) is situated parallel to the axis (14) of the sensor element (1), wherein a median axis (13) of the one magnet (10) situated at a right angle to the axis (12) advantageously intersects the axis (14) of the sensor element (1).

9. A device according to one of Claims 1 to 8, **characterized in that** the second magnet (11) is rotated with respect to the first magnet (10) by an angle (α) about an axis (15) which is parallel to the median axis (13) of the first magnet (10) and which preferably intersects the axis (14) of the sensor element (1).

10. A device according to one of Claims 1 to 9, **characterized in that** the axis (14) of the sensor element (1) extends parallel to a rotary movement axis (20) of the object to be measured (17, 19).

11. A device according to one of Claims 1 to 9, **characterized in that** the axis (14) of the sensor element (1) extends at a right angle to a rotary movement axis (20) of the object to be measured (17, 19).

12. A device according to one of Claims 4 to 11, **characterized in that** a first rectifier (8) is connected downstream of one secondary winding (4) in order to detect an induced voltage (**U**_{**x**}) as a first measurement variable, and a second rectifier (8) is preferably connected downstream of the series connexion of the two secondary windings (4, 5) in order to detect an induced difference voltage (**U**_{**ϕ**}) as a second measurement variable, wherein the two rectifiers (8, 9) advantageously have means for rectifying peak values.

13. A device according to one of Claims 4 to 12, **characterized in that** the voltage source (7) connected to the primary winding (2) has means for generating a triangular-alternating current (**i**_{**P**}).

14. A device according to one of Claims 6 to 13, **characterized in that** the core (3) comprises an elongate strip of soft magnetic crystalline material on the one hand and at least one strip of amorphous material on the other hand.

15. A device according to one of Claims 6 to 13, **characterized in that** the core (3) comprises an elongate strip of soft magnetic crystalline material on the one hand and at least one strip of nanocrystalline material on the other hand.

16. A device according to one of Claims 6 to 13, **characterized in that** the core (3) consists of plastics-bonded material.

17. A device according to one of Claims 4 to 16, **characterized in that** the frequency of the alternating current (**i**_{**P**}) impressed on the primary winding (2) amounts to between 3 kHz and 5 kHz, and the effective value of the alternating current (i_{P}) amounts to between 5 mA and 20 mA.

## Revendications

1. Dispositif pour déterminer en contact la position d'un objet de mesure, de préférence un arbre de commutation d'une boîte de vitesses d'un véhicule automobile, comportant un élément formant capteur réagissant à des forces magnétiques et le long duquel est déplaçable l'objet de mesure, qui est équipé d'au moins un élément de déclenchement, **caractérisé en ce que** l'élément de déclenchement (6) possède deux aimants (10,11) montés fixes l'un par rapport à l'autre et qui sont séparés par une certaine distance et sont disposés dans une zone située à côté de l'élément formant capteur (1), et qu'un aimant (11) est pivoté d'un angle (α) par rapport à l'autre aimant (10), pour produire un entrefer virtuel élargi d'un côté.

2. Dispositif selon la revendication 1, **caractérisé en ce que** les deux aimants (10,11) agencés de préférence de la même manière sont réalisés au moins en forme d'anneaux partiels, et de préférence sont des aimants annulaires.

3. Dispositif selon la revendication 1 ou 2, **caractérisé en ce que** l'élément formant capteur (1) comporte une bobine de mesure, qui s'étend parallèlement à la direction de déplacement (x) de l'objet de mesure (17, 19).

4. Dispositif selon la revendication 3, **caractérisé en ce qu'**un enroulement primaire (2) de la bobine de mesure est raccordé à une source de courant (7), de préférence une source de courant alternatif, et que sur l'enroulement primaire (2) sont disposés avantageusement deux enroulements secondaires (4,5), dont la distance réciproque est adaptée au trajet maximum de déplacement du corps de mesure (17,19).

5. Dispositif selon la revendication 4, **caractérisé en ce que** les deux enroulements secondaires (4,5) possèdent des sens d'enroulement opposés et sont branchés de préférence en série.

6. Dispositif selon l'une des revendications 3 à 5, **caractérisé en ce que** la bobine de mesure possède un noyau (3) formé d'un matériau magnétique doux et que de préférence l'élément de déclenchement (6) pour la saturation du noyau (3) est prévu en un emplacement voisin de l'objet de mesure (17,19).

7. Dispositif selon l'une des revendications 3 à 6, **caractérisé en ce que** les deux aimants (10,11) sont séparés par une distance (d₁) de l'axe (14) de la bobine de mesure.

8. Dispositif selon l'une des revendications 1 à 7, **caractérisé en ce qu'**un aimant (10) est disposé de telle sorte que son axe (12) est parallèle à l'axe (14) de l'élément formant capteur (1), auquel cas avantageusement un axe médian (13), perpendiculaire à l'axe (12), d'un aimant (10) croise l'axe (14) de l'élément formant capteur (1).

9. Dispositif selon l'une des revendications 1 à 8, **caractérisé en ce que** le second aimant (11) est pivoté de l'angle (α) par rapport au premier aimant (10) autour d'un axe (15) qui est parallèle à l'axe médian (13) du premier aimant (10) et de préférence croise l'axe (14) de l'élément formant capteur (1).

10. Dispositif selon l'une des revendications 1 à 9, **caractérisé en ce que** l'axe (2) de l'élément formant capteur (1) s'étend parallèlement à un axe de déplacement en rotation (20) de l'objet de mesure (17,19).

11. Dispositif selon l'une des revendications 1 à 9, **caractérisé en ce que** l'axe (14) de l'élément formant capteur (1) s'étend perpendiculairement à un axe de déplacement en rotation (20) de l'objet de mesure (17,19).

12. Dispositif selon l'une des revendications 4 à 11, **caractérisé en ce qu'**un premier redresseur (8) est branché en aval d'un enroulement secondaire (4) pour la détection d'une tension induite (Uₓ) en tant que première grandeur de mesure, et que de préférence le second redresseur (9) est branché en aval du circuit série formé des deux enroulements secondaires (4a) pour la détection d'une tension différentielle induite (U_{ϕ}) en tant que seconde grandeur de mesure, les deux redresseurs (8,9) comportant avantageusement des moyens pour le redressement de la valeur maximale.

13. Dispositif selon l'une des revendications 4 à 12, **caractérisé en ce que** la source de courant (7) raccordée à l'enroulement primaire (2) comporte des moyens pour produire un courant alternatif de forme triangulaire (ip).

14. Dispositif selon l'une des revendications 6 à 13, **caractérisé en ce que** le noyau (3) est constitué d'une part par une bande allongée formée d'un matériau magnétique doux cristallin et d'autre part par au moins une bande formée d'un matériau amorphe.

15. Dispositif selon l'une des revendications 6 à 13, **caractérisé en ce que** le noyau (3) est constitué d'une part par une bande allongée formée d'un matériau magnétique doux cristallin et d'autre part par au moins une bande formée d'un matériau nanocristallin.

16. Dispositif selon l'une des revendications 6 à 13, **caractérisé en ce que** le noyau (3) est constitué par un matériau lié à une matière plastique.

17. Dispositif selon l'une des revendications 4 à 7, **caractérisé en ce que** la fréquence du courant alternatif (ip) injecté dans l'enroulement primaire (2) est comprise entre 3 kHz et 5 kHz et que la valeur efficace du courant alternatif (ip) est comprise avantageusement entre 5 mA et 20 mA.
